# EUROPEAN PATENT APPLICATION

(11) **EP 3 252 612 A1**
(43) Date of publication of application: **06.12.2017**
(21) Application number: 16743156.8
(22) Date of filing: 18.01.2016
(51) Int. Cl.: G06F 13/00

(54) **INFORMATION PROCESSING DEVICE AND PROGRAM**

(30) Priority: 27.01.2015 JP 2015013492
(71) Applicant: NTT DOCOMO, INC., Chiyoda-ku Tokyo 100-6150 (JP)
(72) Inventor: KURISU, Toshiharu, Tokyo 100-6150 (JP); SASAKI, Maki, Tokyo 153-0042 (JP)
(74) Representative: Hoffmann Eitle
(86) International application number: PCT/JP2016/051289
(87) International publication number: WO 2016/121552

(57) **Abstract**

Selection unit 112 selects one of a plurality of determination condition for determining whether to change the status of content, which preview information is displayed in a predetermined area, to a viewed status. Determination unit 113 determines whether to change the status of content, which preview information is displayed in a predetermined area, to the viewed status based on the selected determination condition. Display controller 114 displays, in a predetermined area, preview information of content according to an icon, which is included in a plurality of icons, displayed at predetermined position. Display controller 114 displays the plurality of icons in either a manner representing that content has been viewed or a manner representing that content has not been viewed.

## Description

### Technical Field

### The present invention relates to a technique for indicating content that has been viewed.

### Background Art

There are known in the art various techniques for indicating that a content has been viewed. Patent Document 1 discloses a technique for changing a status of a received mail to a "viewed status" when it is determined that a body of the received mail is fully enclosed in an area used for preview of a selected received mail.

### Citation List

### Patent Publication

Patent Document 1: JP2009-104622A1

### Summary of Invention

### Technical Problem

In the techniques disclosed in Patent Document 1, it is determined that a content has been viewed only when all of a body of a received mail, namely, the entire content of the mail is displayed within a preview area. There are instances, however where such a technique may not be desirable. For example, while the technique may be adequate when a content is email, in a case, for example, that the content is weather information, it is possible that only a part of the information (a daily forecast and temperature of the day, for example) may need to be viewed. Furthermore, even when content to be viewed is of a same type, in contrast to the example above, it may not be desirable to view such content by use of a fixed determination criterion. For example, it may be desirable to change a criterion so that the viewed status is changed if a weekly forecast has been displayed as well as a daily forecast, temperatures, depending on a season.

The present invention provides a technique enabling a condition for determining whether to change a viewed status of a content to be varied.

### Solution to Problem

According to one aspect of the present invention, there is provided an information processing device, including: a selection unit that selects a condition from among a plurality of conditions for determining whether to change a status of the content to a value indicating that the content has been viewed, in a case that information showing that at least a part of the content is displayed, the content corresponding to an image selected from among a plurality of images respectively corresponding to a plurality of categories of contents, the plurality of conditions being related to one or more attributes of a content attribute, a user attribute and a situation attribute; and a determination unit that determines whether to change the status of the content including the displayed information to the value indicating that the content has been viewed in accordance with the selected condition.

The selection unit may select the condition in response to an item of an attribute of the content including the displayed information, an attribute of a user who is determined as being a viewer of the content, a location where the user is located or a time when the information is displayed.

The selection unit may select the condition in response to a relationship between a time duration in which the information is displayed and a threshold set for the item.

Responsive to a selection operation performed by a user to select the image corresponding to the content including the displayed information, the selection unit may select the condition in response to a manner in which the user performs the selection operation when the image is selected.

The selection unit may select selects the condition in response to a combination of the manner of a user's selection operation and one of an attribute of the content including the displayed information, an attribute of a user who is determined as being a viewer of the content, a location where the user is located or a time when the information is displayed.

The information processing device may further includes a display controller that performs a display control of the plurality of images, the display control including arranging the plurality of images on at least one row, moving the plurality of images along the at least one row in response to an operation performed by a user, and displaying, in a predetermined area, the information included in a content corresponding to an image, which is one of the plurality of images, displayed at a predetermined position of the at least one row.

The display controller may stop the image from moving in response to termination of an operation performed by a user while the image keeps moving. Responsive to a selection operation performed by a user to select the image corresponding to the content including the displayed information, the selection unit may select a different determination condition for a content including the displayed information in response to an operation of the user performed as the selection operation, the operation being terminated after the movement of the image is stopped, and for a content including the displayed information in response to an operation of the user performed as the selection operation, the operation being terminated while the image is moving.

According to another aspect of the present invention, there is provided a program for causing a computer to execute a process, the process including: selecting a condition from among a plurality of conditions for determining whether to change a status of the content to a value showing that the content has been viewed, in a case that information showing at least a part of the content is displayed, the content corresponding to an image selected from among a plurality of images respectively corresponding to a plurality of categories of contents, the plurality of conditions being related to one or more attributes of a content attribute, a user attribute and a situation attribute; and determining whether to change the status of the content including the displayed information to the value indicating that the content has been viewed in accordance with the selected condition.

According to yet another aspect of the present invention, there is provided a method for processing information, the method including: selecting a condition from among a plurality of conditions for determining whether to change a status of the content to a value showing that the content has been viewed, in a case that information showing at least a part of the content is displayed, the content corresponding to an image selected from among a plurality of images respectively corresponding to a plurality of categories of contents, the plurality of conditions being related to one or more attributes of a content attribute, a user attribute and a situation attribute; and determining whether to change the status of the content including the displayed information to the value indicating that the content has been viewed in accordance with the selected condition.

### Effects of the Invention

According to the present invention, a condition for determining whether to change a viewed status of a content can be varied..

### Brief Description of the Drawings

Fig. 1 is a diagram showing a configuration of a distribution system.
Fig. 2 is a diagram showing a hardware configuration of a user terminal.
Fig. 3 is a diagram showing a hardware configuration of a distribution device.
Fig. 4 is a diagram showing an example of a menu screen.
Fig. 5 is a diagram showing one concept for displaying icons.
Fig. 6 is a diagram showing another concept for displaying icons.
Fig. 7 is a diagram showing yet another concept for displaying icons.
Fig. 8 is a diagram showing a functional configuration of the user terminal regarding display control of icons.
Fig. 9 is a diagram showing an example of a relationship between a content attribute and a threshold.
Fig. 10 is a diagram showing examples of an icon displayed in a manner representing that content has been viewed and an icon displayed in a manner indicating that a content has not been viewed.
Fig. 11 is a diagram showing a procedure of an operation to switch to the manner for indicating that a content has not been viewed.
Fig. 12 is a diagram showing a procedure of an operation to switch to the manner representing that content has been viewed.
Fig. 13 is a diagram showing an example of a user attribute table.
Fig. 14 is a diagram showing an example of a location table.
Fig. 15 is a diagram showing an example of a displayed time table.
Fig. 16 is a diagram showing an example of a functional configuration according to another modification.

### Reference Signs List

- 1: Distribution system
- 2: Network
- 10: User terminal
- 20: Distribution device
- 11, 21: Control unit
- 12, 22: Storage unit
- 13, 23: Communication unit
- 14: Input unit
- 15: Output unit
- 16: Sensor unit
- 111: Acquisition unit
- 112: Selection unit
- 113: Determination unit
- 114: Display control unit

### Description of Exemplary Embodiments

### 1. Embodiments

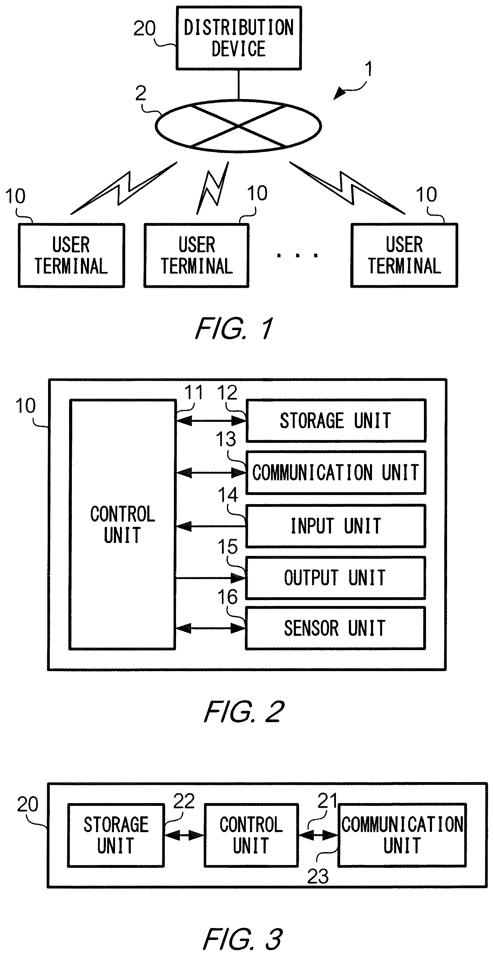

Fig. 1 shows a configuration of distribution system 1 according to one embodiment of the present invention. Distribution system 1 is a computer system for distributing content to be viewed by a user. The content is information that is represented by, for example, a character, an image, a sound, or the like. The content may also be referred to as digital content. For example, the content may be: weather information (e.g., a weather forecast, or a weather warning); information on a facility such as a restaurant; news information; information relating to a personal event that is of specific interest to the user (e.g., a diary update); a schedule update; information relating to an event (or a festival) such as a concert or an exhibition; and so forth.

Distribution system 1 distributes a plurality of such categories of content. The term "categories" used herein means classifications according to fields to which a content relates (e.g., weather, eating out, a news article, and so on.), or providers of the content (e.g., a business or a user). The content not only is distributed from distribution device 20, but also is generated by user terminal 10. The term "content" as used in this description means either the information as described above, or other information that is generated by digitization of the information in a predetermined format. In one example, the content is displayed on a web page. However, the content may be any data as long as the data has a format that is readable for display by user terminal 10.

Distribution system 1 distributes a plurality of content as described above. Distribution system 1 distributes content that includes new detail (e.g., weather of the day when the content is weather information) as a same category of content as time proceeds. Therefore, it is desirable that a user readily can understand that a certain content has already been viewed by referring to the viewed status of a content. A method to make a user understand that a content has been previously viewed will now be described.

Distribution system 1 includes a plurality of user terminals 10 and distribution device 20, which are connected via network 2. Network 2 includes, for example, the Internet and a mobile communication network. User terminals 10 are electronic devices that can be held and carried by users. User terminals 10 are typically smartphones or tablet devices. User terminals 10 have at least a function for outputting content.

Fig. 2 shows a hardware configuration of user terminal 10. User terminal 10 includes control unit 11, storage unit 12, communication unit 13, input unit 14, output unit 15, and sensor unit 16. Control unit 11 is a means for controlling an operation of the unit of user terminal 10. Control unit 11 includes a processing unit, such as a Central Processing Unit (CPU) and an application processor, and a memory (main memory). Control unit 11 controls an operation of the units of user terminal 10 by executing programs. The programs executed by control unit 11 include a program for controlling a display of a menu screen, which will be described later. Storage unit 12 is a means for storing data. Storage unit 12 includes a storage medium such as a flash memory. The storage medium may be attachable to user terminal 10. Storage unit 12 may store data required for an operation of control unit 11 and content received from the distribution device.

Communication unit 13 is a means for transmitting and receiving data via network 2. Communication unit 13 includes a baseband processor and an antenna. Communication unit 13 performs a modulation and demodulation according to network 2 when transmitting and receiving data. Communication unit 13 receives content from distribution device 20 via network 2. Input unit 14 is a means for receiving an input of data. Input unit 14 includes a keypad and microphone. When a display unit includes a touch screen display, input unit 14 may include a sensor portion of the touch screen display. Output unit 15 is a means for outputting data.

Output unit 15 includes at least a display unit including, for example, a liquid-crystal display. In this embodiment, the display unit includes a touch screen display. Output unit 15 may include a speaker. That is, the meaning of the term "output" as used herein is not limited to a display. Sensor unit 16 is a means for detecting a change in status of user terminal 10 and a user. Sensor unit 16 includes a plurality of sensors. For example, sensor unit 16 includes a Global Positioning System (GPS) module that detects a position of user terminal 10.

Distribution device 20 is a server device for distributing content. Distribution device 20 stores a plurality of categories of content, and transmits to user terminals 10 the content selected for users. The content stored in distribution device 20 may be created and provided by, for example, a third party business (a content provider).

Fig. 3 shows a hardware configuration of distribution device 20. Distribution device 20 includes control unit 21, storage unit 22, and communication unit 23. It is to be noted that the function of distribution device 20 may be achieved by cooperation of a plurality of server devices, rather than reliance on a single device.

Control unit 21 is a means for controlling an operation of the units of distribution device 20. Control unit 21 includes a processing unit, such as a CPU, and a memory. Control unit 21 distributes content selected for each user at a predetermined timing by executing a program for controlling a distribution of content to each user.

Storage unit 22 is a means for storing data. Storage unit 22 includes a storage medium, such as a hard disk drive. Storage unit 22 stores data required for the operation of control unit 21 and for content to be distributed to user terminals 10. Communication unit 23 is a means for transmitting and receiving data via network 2. Communication unit 23 transmits the content to user terminals 10. Communication unit 23 may also receive new content from an external server device or other devices, as required.

The configuration of distribution system 1 is as described above. Each user terminal 10 displays content according to an operation performed by the user. User terminal 10 displays a menu screen for displaying content.

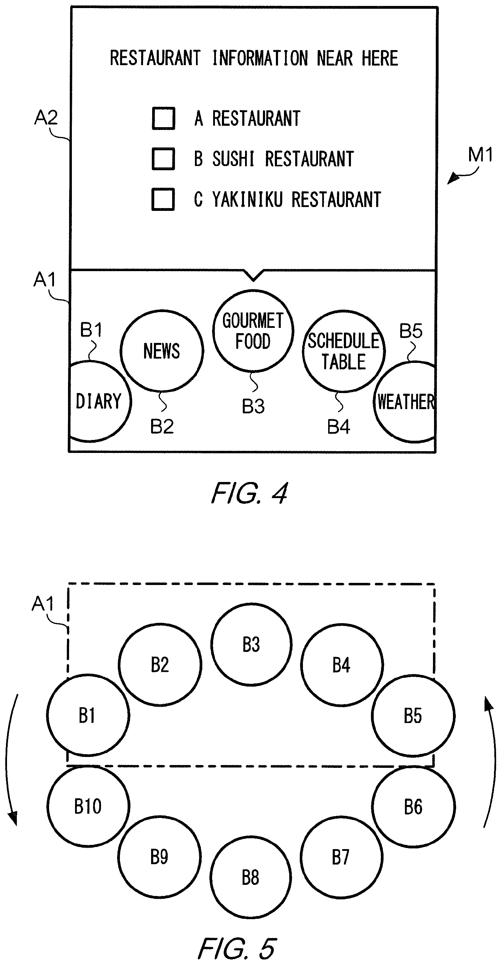

Fig. 4 shows an example of a menu screen. Menu screen M1 includes areas A1 and A2. Area A1 is a display area of a plurality of images (hereinafter referred to as "icons") linked to a plurality of categories of content.

In area A1, five icons B1 to B5 are disposed. However, the number of icons displayed in area A1 is not limited to five. The number of icons may be less than or equal to four, or alternatively may be more than or equal to six. Only some of the total number of icons to be displayed are displayed in area A1. The icons to be displayed are, for example, set by a user. In each icon, a content menu name, which is information summarizing content, linked to the icon, or a character or an image representative of an identifier of the content (e.g. a diary, news, gourmet food, a schedule table, weather, and so forth) is displayed.

For example, in icon B3, there are displayed characters "gourmet food," which are representative of a menu name linked to content for displaying gourmet food information; for example, information on a gourmet restaurant or other information relating to gourmet food, the information displayed being dependent on a location of user terminal 10. In icon B4, there are displayed characters "schedule table," which are representative of a menu name linked to content relating to a schedule of the user. When a predetermined operation is performed to display content corresponding to the icon, for example, a tap operation performed on the icon, the content is displayed by execution of the corresponding application program. Area A2 is an area designated for displaying preview information representative of at least a part of content linked to an icon selected from the plurality of icons to be displayed in area A1.

The preview information is visual information representative of content detail. The preview information serves to enable a user to understand content detail, or at least a part of content detail, without a need for the content to be displayed in its entirety. For example, the preview information may be a character or an image that is included in the content or that is obtained by editing or processing the character or image (e.g., a thumbnail), or another character or image that explains the character or image. The character or image represented by the preview information may constitute either a part of the content or the entire content. Thus, the preview information may constitute a content summary, or content detail. The preview information can be determined for each part of a content in advance and may be included in content data. Alternatively, the preview information may be generated from the content data upon execution of an application program.

In the example shown in Fig. 4, "restaurant information near here," which is a part of gourmet food information, is displayed as preview information of content linked to the icon "gourmet food." The content of the gourmet food information includes, in addition to this information, restaurant information in each area, a menu of each restaurant, photos of the inside of restaurants, a price list, and a map showing the location of each restaurant. These items of gourmet food information are displayed by execution of the corresponding application program. At this time, menu screen M1 is switched to another screen on which the content is displayed. That is, the preview information is displayed on a screen used for an operation of an icon to display corresponding content; while the content is displayed on another screen that is switched from this screen. In this manner, the preview information and content in this embodiment differ in that the preview information is displayed together with an icon (area A1), while the content is not displayed with any icon.

User terminal 10 controls a display of an icon in area A1 according to an operation performed by a user. More specifically, when the user performs a drag operation or a flick operation (an operation in which a finger is swiped on a screen) in either direction to the right or left on area A1, user terminal 10 controls the display of the icon such that the icon moves in the direction input by the operation.

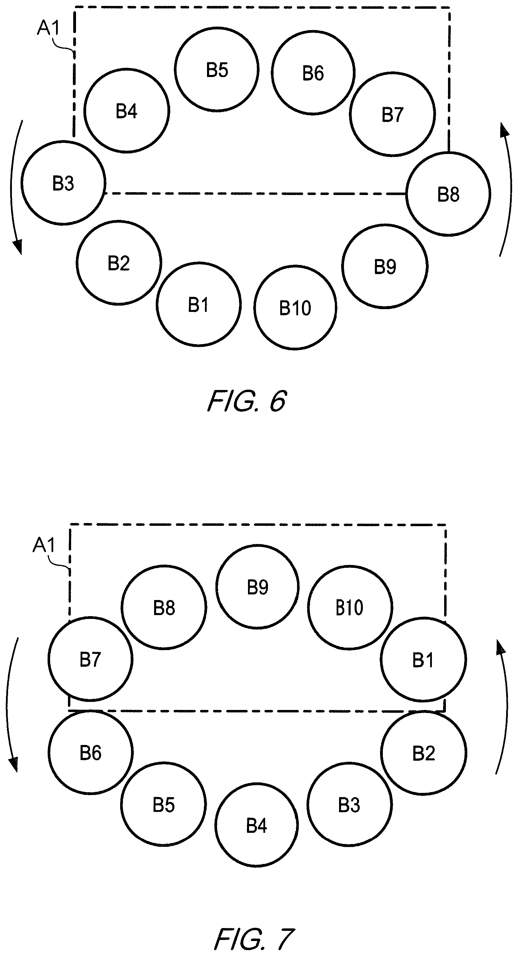

Each of Figs. 5 to 7 is a diagram showing one concept for display of icons. The concept for display refers to a visual appearance. In this example, the number of icons to be displayed is "10," and the number of icons displayed in area A1 of menu screen M1 simultaneously is "5." User terminal 10 displays icons B1 to B10 such that icons B1 to B10 arranged in a predetermined order move in a circle. The term "move in a circle" as used herein refers to a movement of icons such that they are repeatedly displayed in the same order, namely, a movement of a displayed portion in which an order in which icons are arranged is maintained. For example, when the icons are moved in a counter-clockwise direction from positions shown in Fig. 5, icon B1 is temporarily hidden from menu screen M1 as shown in Fig. 6. When the icons continue to be moved in the same direction, icon B1 is displayed on menu screen M1 again, as shown in Fig. 7.

When movement of the icons is stopped, user terminal 10 displays each icon at a predetermined position. More specifically, user terminal 10 may display one of the icons at the center of area A1, and display the other icons in area A1 at positions such that five icons are arranged with a predetermined space between them. As a result, when movement of the icons is stopped, five icons are always displayed on menu screen M1, and any one of the five icons may be displayed at the center of area A1. In contrast, during movement of the icons, it may be the case that no icon is displayed at the center of area A1, as shown in Fig. 6.

In area A2, preview information of content corresponding to the icon displayed at the center of area A1 is displayed. That is, an icon displayed at the center of area A1 according to an operation performed by a user is selected from among the plurality of icons as an icon linked to preview information to be displayed. It is to be noted that in this embodiment, no preview information is displayed when an icon moves through the center of area A1 during movement of the icons. Preview information is displayed when an icon is displayed at the center of area A1 in a static state. It is to be noted that a display of preview information is not limited to this example. Preview information may be displayed when an icon moves through the center of area A1 without stopping.

Upon receiving the above predetermined operation (e.g., a tap operation) on an icon displayed at the center, user terminal 10 executes a predetermined process. The predetermined process is a process representative of content indicated by an icon. The predetermined process includes, for example, a process for displaying content linked to an icon on which the predetermined operation is performed, and a process for launching an application program associated with the icon (namely, corresponding to the content). It is to be noted that user terminal 10 may execute different processes for different icons (namely, different items) at this time. In this embodiment, user terminal 10 does not execute the above predetermined process when the predetermined operation is performed on an icon other than the icon displayed at the center. However, the manner of execution of the predetermined process is not limited to this example. The predetermined process may be executed in this case.

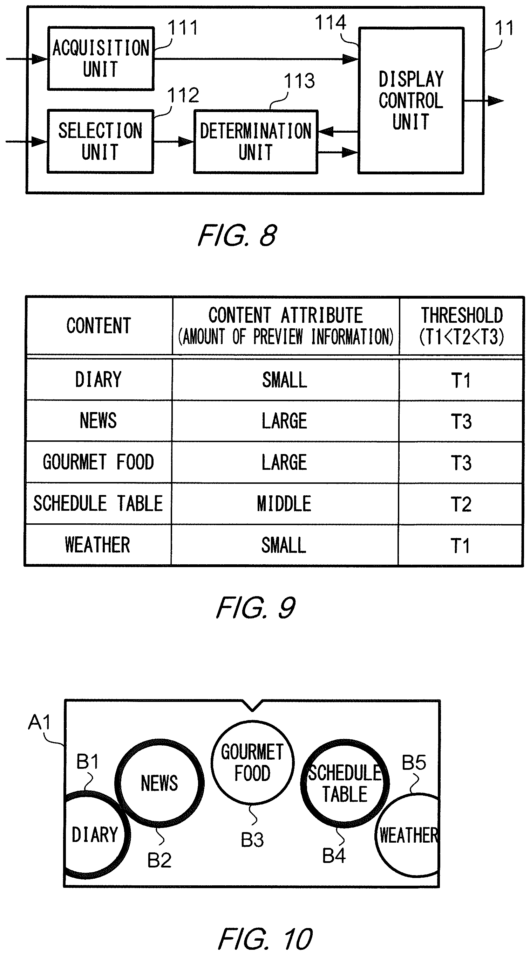

Fig. 8 shows a functional configuration of user terminal 10 with regard to a display control of an icon. Control unit 11 of user terminal 10 realizes functions corresponding to acquisition unit 111, selection unit 112, determination unit 113, and display controller 114, which are described below, by executing a predetermined program.

Acquisition unit 111 is a means for acquiring content. Acquisition unit 111 acquires content from distribution device 20 via network 2. Acquisition unit 111 may also acquire content to be displayed that is generated in user terminal 10 or is stored in user terminal 10. Acquisition unit 111 provides display controller 120 with the acquired content.

Selection unit 112 is a means for selecting a determination condition from a plurality of determination conditions for determining whether the status of a content including displayed preview information is changed to a viewed status. The determination conditions are used for determining whether a content has been viewed by determining whether the determination conditions are met. It may be determined that a content has been viewed when the conditions are met. Alternatively, it may be determined that the content has not been viewed when the conditions are met.

In this embodiment, selection unit 112 selects one of the plurality of determination conditions for determining the status of a content is changed to a viewed status when period (time length) in which preview information of the content is displayed exceeds a threshold. In this case, different thresholds for displayed period are set to each of the plurality of determination conditions. It is determined that the condition is met and the content has been viewed when displayed period exceeds a threshold that is set for each of the conditions. In this embodiment, each of the thresholds of displayed periods is set in accordance with an attribute of content including the displayed preview information. The attribute of content is, for example, an amount of preview information.

Fig. 9 shows an example of a relationship between a content attribute and a threshold. In this example, attributes (an amount of preview information) of each of the contents, "diary," "news," "gourmet food," "a schedule table," and "weather" shown in Fig.4 are "small," "large," "large," "middle," and "small." Thresholds according to the attributes are "T1," "T3," "T3," "T2," and "T1" (relation of the thresholds is T1<T2<T3.) An amount of preview information means, for example, an amount of data. More specifically, the amount of preview information is determined in accordance with the number of text characters (for example, preview information is large if the number of text characters is large.) An amount of preview information may be determined as being small as a percentage of area of displayed images is large when text and images are mixed in preview information.

In either case, it is desirable to set the thresholds of displayed periods so that an amount of preview information is larger as time required for view of preview information by a user is greater. In this regard, the manner of setting the thresholds is not limited to the above example. The thresholds may be set so that an amount of preview information is smaller as the required time for viewing the information is greater. In the example shown in Fig. 9, a threshold of a displayed period is smaller, since an amount of preview information is smaller, and it is determined that content has been viewed even though a displayed period of preview information is short. Selection unit 112 executes the above selection using a table that associates a content attribute with a threshold of a displayed period, for example, shown in Fig. 9. Selection unit 112 selects, as described above, a determination condition according to a content attribute. Selection unit 112 notifies determination unit 113 of the selected determination condition.

Determination unit 113 is a means for determining whether to change the status of content including displayed preview information to the viewed status in accordance with the selected determination condition. In this embodiment, determination unit 113 determines that content including the displayed preview information has been viewed when a period in which the preview information is displayed exceeds a threshold notified by selection unit 112. Determination unit 113 notifies display controller 114 of a result of the determination.

Display controller 114 is a means for performing display control of a menu screen. Display controller 114 controls a display of icons and a display of preview information. Display controller 114 determines an arrangement of the icons, movement or stop of movement of the icons according to an operation performed by a user. Display controller 114 controls a moving speed of the icons as proportional to a moving speed of a finger of the user. More specifically, display controller 114 displays a plurality of icons arranged in at least one row (in this embodiment, one row) on the screen, which is included in output unit 15, and moves the plurality of icons along the at least one row according to an operation performed by a user, such as the above drag operation or the above flick operation. In this manner, the positions of the icons can be changed by an intuitive operation by a user.

In a case where a moving speed of a finger of a user is under a threshold (e.g., zero) at the end of an operation, such as a drag operation, display controller 114 moves an icon to a position, which is one of predetermined positions where the icons are placed, that is nearest to where the icon is when the user terminates the operation and stops the icon at the position. In a case where a moving speed of a finger of a user is greater than a threshold (e.g., zero) at the end of the operation, such as a flick operation, display controller 114 slows down the moving speed of the icon gradually, moves the icon to a position which is one of the predetermined positions where the icons are placed, that is nearest to where the icon is when the moving speed is under the threshold and stops the icon at the position. In this case, the movement of the icon is allowed to continue for a longer period of time than in a case when, for example, the icon is stopped suddenly while the icon is still moving at the end of the operation.

Display controller 114 displays preview information of content corresponding to an icon displayed at a predetermined position (in this embodiment, at the center of area A1) of the at least one row in which the plurality of icons are arranged. Display controller 114 notifies determination unit 113 of information (e.g., display start time and display end time) representing a displayed period in which the preview information is displayed up to the time that display controller 114 switches preview information to be displayed. Determination unit 113 executes the determination as described above based on the notified information representing a displayed period.

Display controller 114 displays the plurality of icons in manners depending on whether content corresponding to each icon has been viewed or not. In other words, display controller 114 displays each icon in a manner representing that content has been viewed or in a manner representing that content has not been viewed. Here, the manner refers to a visual appearance.

Fig. 10 shows examples of an icon displayed in the manner representing that content has been viewed and an icon in the manner representing that content has not been viewed. Icons B3 and B5 are displayed in the manner representing that content has been viewed, and icons B1, B2, and B4 are displayed in the manner indicating that the content has not been viewed. In this example, a line of the outer circumference of an icon in the manner representing that content has been viewed is thicker than that in the manner indicating that content has not been viewed. It is to be noted that manners to display icons are not limited to these example. For example, a manner in which color and/or shape may be used to represent icons to indicate whether the content has been viewed. Similarly, a manner in which a change of visual appearance (e.g., blinking and/or vibration) may be used to indicate that content has been viewed.

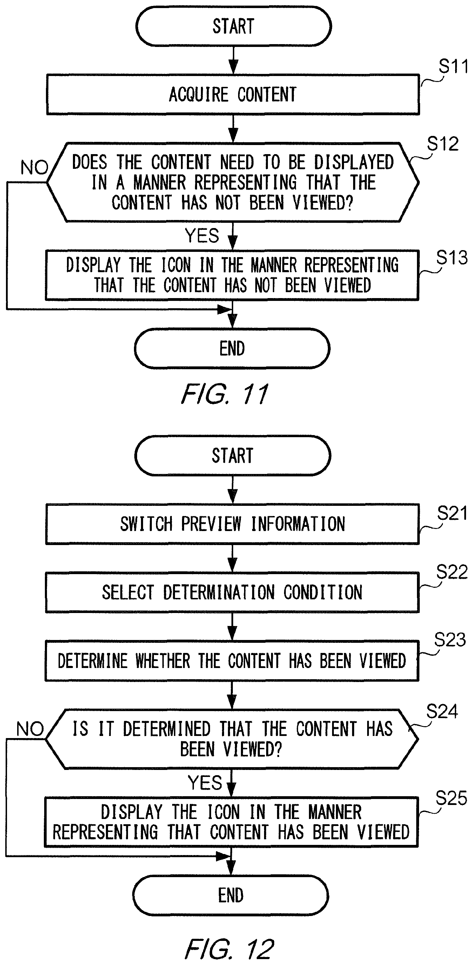

When display controller 114 receives from acquisition unit 111 a new content corresponding to an icon displayed in the manner representing that content has been viewed, display controller 114 changes the manner of displaying the icon to the manner indicating that the content has not been viewed. When display controller 114 receives from determination unit 113 a notification of a determination result indicating that content, which corresponds to an icon displayed in the manner indicating that content has not been viewed, has been viewed, display controller 114 changes the manner of displaying the icon corresponding to the contents to the manner representing that content has been viewed. The operation of user terminal 10 when a display manner of an icon is changed will be described below with reference to Fig. 11 and Fig. 12.

Fig. 11 is a procedure of an operation when a manner is switched to the one indicating that content has not been viewed. First, control unit 11 of user terminal 10 acquires a content (step S11). Acquisition unit 111 performs the operation of step S11. Then, control unit 11 determines whether the acquired content needs to be displayed in the manner indicating that the content has not been viewed (step S12). In this example, control unit 11 does not change the manner of indicating content to the one indicating that content has not been viewed each time a new content is acquired. Control unit 11 may maintain the manner representing that content has been viewed depending on the acquired content (for example, when the content is not important.) It is to be noted that manners to display an icon are not limited to these examples. The manner may be changed to the manner indicating that content has not been viewed each time a content is acquired.

When it is determined that the acquired content is to be displayed in the manner representing that content has not been viewed (Step S12: YES), control unit 11 displays an icon corresponding to the acquired content in the manner indicating that the content has not been viewed (step S13). Then, control unit 11 exits the procedure of the operation. In this way, if an icon is displayed in a manner representing that content has been viewed, the manner is changed to the one indicating that content has not been viewed. If the icon is already displayed in the manner indicating that content has not been viewed, the manner is maintained. When it is determined that the acquired content is not to be displayed in the manner representing that content has not been viewed (Step S12: NO), control unit 11 exits the procedure of the operation without executing the operation of Step S13. Display controller 114 performs the operation of steps S12 and S13.

Fig. 12 is a procedure of an operation when a manner is changed to a manner representing that content has been viewed. Switching the preview information (step S21) by control unit 11 triggers this procedure. Control unit 11 selects the determination condition based on a display period of the previous preview information before the switching and an attribute of a corresponding content (step S22.) Display controller 114 performs the operation of step S21 and selection unit 112 performs the operation of step 22.

Next, Control unit 11 determines whether to change the status of the content whose preview information is displayed to the viewed status by using the selected determination condition (step S23.) Subsequently, when it is determined that the status of the content is to be changed to the viewed status in step S23 (step S24: YES), control unit 11 displays an icon corresponding to the content in a manner representing that content has been viewed (step S25) and quits the procedure of the operation. In this way, when the icon is displayed in the manner indicating that content has not been viewed, the manner is changed to the manner representing that content has been viewed. When the icon is already displayed in the manner representing that content has been viewed, the manner is maintained. When it is determined that the content has not been viewed (step S24: NO), control unit 11 quits the procedure of the operation without performing the operation of step S25. Determination unit 113 performs the operation of step S23 and display controller 114 performs the operation of step S24 and S25.

Distribution system 1 distributes a plurality of categories of content as described above. Therefore, to determine whether to change the status of the content to the viewed status in a unified manner may be not desirable because there may be some cases the determination may not match the users' needs appropriately even if the unified manner may be desirable in a case where only one category of content (e.g., only email) is distributed. In this embodiment, as described above, it is determined whether to change the status of the content including the displayed preview information to the viewed status. The determination is performed by using one determination condition selected from among the plurality of determination condition. That is, this embodiment enables to vary the determination condition by which it is determined whether to change the status of the content to the viewed status.

Furthermore, as described above, using a unified threshold to determine that content has been viewed, relating to a displayed period in which the preview information is displayed, some flaws may arise, for example, in a case that an amount of preview information is large, the content is determined to have been viewed even though the preview information of the content has not been viewed by a user. Alternatively, in a case that an amount of preview information of which is small, the content is determined to have not been viewed yet even though the preview information has been fully viewed by a user. In this embodiment, varying the determination condition by using thresholds corresponding to content attributes prevents occurrence of improper determination of whether content has been viewed and enables appropriate determination to be made.

### 2 Modifications

The above embodiment is merely an example of an embodiment of the present invention. The above embodiment may be modified as described below. The above embodiment and the following modifications may be combined with each other.

### 2-1 Attribute of content

In the embodiment, an amount of content is used as the content attribute. The content attribute is not limited to this example. For example, a category of a content may be used as the content attribute. In this case, for example, when the content is news, a large value may be set to the threshold of the displayed period because news content may include large amounts of text. Alternatively, when the content is weather report, a small value may be set to the threshold of the displayed period because weather content may include a lot of images and not include much text.

Even if plural contents belong to the same category, for example, news category, an attribute of the contents may be considered. The considered attribute may represent, for example, fields of the news such as economics, politics, entertainment, sports, and so on. In the case that content belongs to fields of economics or politics, for example, a large value may be set to the above threshold of the displayed period of the preview information since the content may include matter that might be difficult to understand and a user would require more time to view the information. In another example, a small value may be set to the threshold for contents belonging to fields such as entertainment and sports that include matters that are easy for a user to understand.

In another example, for a content such as a weather forecast, two attributes may be used. One attribute may represent content which is distributed regularly, such as a weather forecast; and the other attribute may represent content distributed in case of an emergency such as earthquake alerts or a warning of an approaching typhoon etc. A user would notice an icon more readily when the icon indicating that content has not been viewed, compared with an icon indicating that content has been viewed. Therefore, for example, a larger value is set to a threshold of the displayed period for contents distributed in case of an emergency than for contents distributed regularly. For contents distributed in case of an emergency, the status of the contents can be maintained as viewed status longer than contents distributed regularly, so that a user is easily notice the icon of the contents distributed in case of an emergency.

### 2-2 Attribute of a user

Selection unit 112 may select a determination condition by using a method different from the one of the embodiment. For example, selection unit 112 may select a determination condition according to a user attribute. The term "a user" used herein means a user who is determined as being a viewer of a content, preview information of which is displayed. The user is, for example, a user who has or uses a user terminal 10. For example, attributes such as children, adult, and senior citizens are used as user attributes. Selection unit 112 determines, for example, these attributes based on information of a user's age or date of birth etc. stored in user terminal 10. It is to be noted that, when such information is stored in an external device, selection unit 112 may determine the attributes by referring to the data stored in the device. Selection unit 112 uses a user attribute table that corresponds to a user attribute and a threshold of a display period.

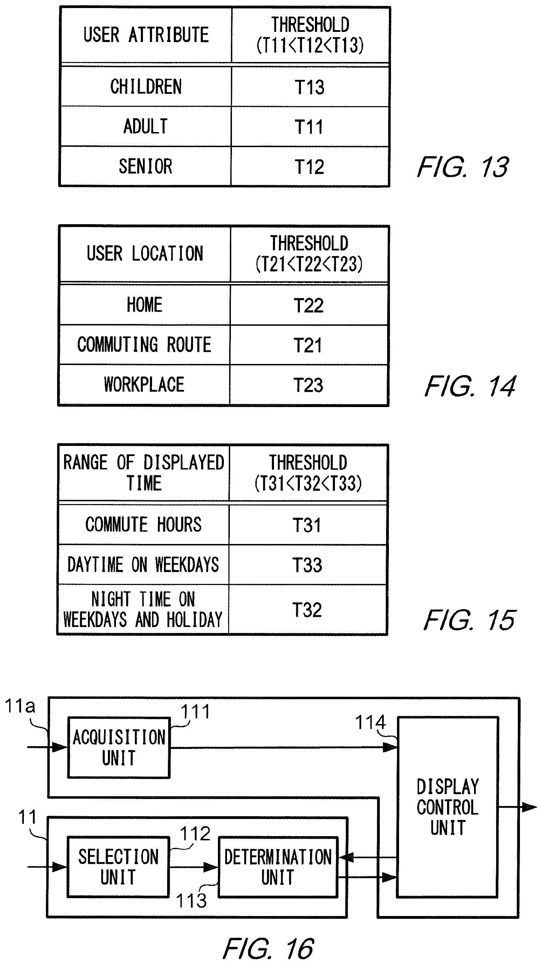

Fig. 13 is an example of a user attribute table. In this example, threshold T11 corresponding to an adult is the smallest. Threshold T12 corresponding to a senior citizen is larger than threshold T11, and threshold T13 corresponding to a child is the largest (T11<T12<T13.) The value of each threshold corresponds to a length of time estimated to be required when the user of each attribute views the preview information. When the preview information has been displayed for more than the length of time length that a user of each attribute is estimated to require to finish viewing the preview information, the time length is considered to have exceeded the threshold and a status of a corresponding content is changed to the viewed status. Setting different values for thresholds based on user attributes enables determination of whether to change the status of the to be more accurate than in a case that the determination condition is selected regardless of the user attributes.

It is to be noted that the user attribute may correspond to age groups of users that are more finely grouped. In another example, any user attribute, which corresponds to the length of time estimated to be required for viewing the preview information, based on a user's occupation, profession (e.g., there are many opportunities to read test or not), and/or a history of content viewing (e.g., represented by a start time and an end time of content display) may be used for determining a threshold. It is to be noted that content may be provided not only for the purpose of viewing, but also to be used as an application (e.g., schedule table or diary) that is operated and used by a user. In this case, a history of a usage of content (e.g., represented by a start time and an end time of the usage of the content, and/or an amount of an operation by the user) may be used as the user attribute. In each of the cases, since a threshold is set according to the time when the user of each attribute is estimated to finish viewing the preview information, the determination whether to change the status of the content can be more accurate, similarly to the example of Fig. 13.

### 2-3 Location (position) of a user

In another example, selection unit 112 may select, for example, the determination condition according to a location of a user. The location of a user is categorized, for example, home, commuting route and workplace. Information representing locations of home, commuting route, and workplace of a user is stored in storage unit 12 of user terminal 10. Selection unit 112 specifies a location of a user based on this information and a location of user terminal 10 measured by GPS module of censor unit 16. Selection unit 112 uses a location table that corresponds to a location of a user and a threshold of a displayed period.

Fig. 14 is an example of a location table. In this example, threshold T21 corresponding to commuting route is the smallest. Threshold T22 corresponding to home is larger than threshold T21, and threshold T23 corresponding to workplace is the largest (T21<T22<T23.) The time required to view preview information may be short on the commuting route because of which a user must focus on viewing preview information. The user may be interested in a TV program and so on, and the user has to view the preview information quickly due to the limitation of time available while commuting. Therefore, thresholds are set depending on a location of a user. The larger the threshold the longer the time required to view the preview information. In the example shown in Fig. 14, by setting the thresholds with larger values in correspondence with a user's location it is possible to determine more accurately whether content has been viewed more so than in a that the determination condition is selected regardless of the user's location, as with the example of Fig. 13.

### 2-4 Displayed time

In another example, selection unit 112 may select, for example, the determination condition according to the time when the preview information is displayed (displayed time.) Selection unit 112 uses a displayed time table corresponding to a range of displayed time and a threshold of displayed period.

Fig. 15 is an example of a table showing displayed time. In this example, threshold T31 corresponding to commute hours is the smallest. Threshold T32 corresponding to night time on weekdays and holidays is larger than threshold T31, and threshold T33 corresponding to daytime on weekdays is the largest (T31<T32<T33.) According to these ranges of displayed time, the larger the threshold the longer the time required to view the preview information, as with commuting route, home, and workplace of the example of Fig. 14. In the example shown in Fig. 15, by setting the thresholds with larger values in correspondence with the user's location, it is possible to determine more accurately whether content has been viewed, more so than in the case where the determination condition is selected regardless of the time period that the preview information is displayed, as with the example of Fig. 13.

### 2-5 Combination of a plurality of matters

Selection unit 112 may select a determination condition corresponding to a combination of matters that include a content attribute, a user attribute, a user location, and time when the preview information is displayed, which are described above. For example, content attributes of a news content include communication category and financial category, and user attributes includes occupations relating to communication and occupations relating to finance. In this case, if the category of the content and the category relating to occupation of the user are the same, selection unit 112 selects a determination condition with a small threshold. This is because the required time to view the preview information is expected to be short. Alternatively, if the two categories are not the same, selection unit 112 selects a determination condition with a large threshold. This is because the time required to view preview information would be longer.

In another example, content attributes of a gourmet content includes the Shinjuku area and the Marunouchi area, and user attributes shows a location of a user, for example, the neighborhood of Shinjuku and the neighborhood of Marunouchi. In this case, if the area of the content attribute and the area where the user is located is the same, selection unit 112 selects a determination condition with a small threshold because the user's interest in the preview information is expected to be high; therefore it is expected that less time is required to view the preview information. Alternatively, if the area of the content attribute and the area where the user is located is not the same, selection unit 112 selects a determination condition with a large threshold because user's interest in the preview information is expected to be low, and it is expected that a longer time is required to view preview information.

In another example, content attribute of a weather content includes the weather of the day and the weather of the following days, and time periods in which the preview information is displayed are categorized as the midmorning and afternoon periods. In this case, if the content attribute is weather of the day and the time is midmorning or the content attribute is weather of the following days and the time is afternoon, selection unit 112 selects a determination condition with a small threshold because user's interest in the preview information is expected to be high; therefore it is expected that the time required to view the preview information to be short. If the content attribute and the time do not satisfy the condition, selection unit 112 selects a determination condition with a large threshold because user's interest in the preview information is not expected to be high; therefore it is expected that the time required to view the preview information to be long. Accordingly, by combining the matters described above, it is possible to determine more accurately whether to change the status of the content to have been viewed, than the case where the determination condition is selected regardless of the combination of attributes.

### 2-6 Relationship about threshold

In each of the above examples, it is determined that content has been viewed when a displayed period during which the preview information exceeds the threshold. However, the determination method is not limited to the examples. For example, in a case that the displayed period is very long, a user could have moved away from user terminal 10 while keeping open the display of the preview information. Therefore, selection unit 112 selects one of a plurality of determination conditions, so as to determine that the content has been viewed, if a period during which the preview information is displayed exceeds a first threshold and is equal to or less than a second threshold (the first threshold is less than the second threshold).

This modification enables user terminal 10 to determine that content has not been viewed in a case that a user seems to be in a situation where the user cannot operate user terminal 10, as a result of which the preview information has not been viewed. Both of the first threshold and the second threshold may be values set on the basis of each of the conditions described above (the content attribute, the user attribute, the user location and the time period during which the preview information is displayed.) That is, it is sufficient that selection unit 112 selects the determination condition to determine whether content has been viewed in accordance with a relationship between the period during which the preview information is being displayed and thresholds according to each of the conditions described above.

### Determination condition

Determination condition is not limited to the example described in the embodiment. In the embodiment, selection unit 112 selects a determination condition from a plurality of determination conditions, where the choices of the determination conditions include various thresholds relating to the displayed period during which the preview information is displayed. The choices of the determination conditions are not limited to conditions that relate to the relationship between the displayed period and the threshold. The determination conditions used by selection unit 112 may include, for example, a first determination and a second condition. The first condition is a condition to determine that the content has been viewed if the preview information of the content is displayed without other conditions. The second determination condition is a condition to determine that the content has been viewed when the preview information of the content is displayed and a predetermined process is executed by tapping the icon. Selection unit 112 selects one of these.

Selection unit 112 selects, for example, one determination condition in response to a content attribute from among these determination conditions. Specifically, selection unit 112 selects the second determination condition if the category of the content is the one that is desired to be viewed by a user, and selects the first determination condition when the category of the content is not the one desired to be viewed. For contents desired to be viewed, the status of the contents can be maintained as unviewed status until the icon is tapped, so that a user is easily notice the icon of the contents desired to be viewed, compared with the other contents.

The choices of determination conditions may include a determination condition to determine that the content has been viewed if a predetermined percentage of the content is displayed as the preview information. In this case, selection unit 112 may use a percentage figure as a basis for selecting a determination condition. For example, in a case that the content is news content, selection unit 112 increases the percentage when the category of the content is economics or finance, and decreases the percentage when the category of the content is entertainment or sports. However, the possibility is relatively high that important information (e.g., a value of the barometer confirming the matter of the beginning) is also included in a part of a content that is not displayed as the preview information when the category of the content is economics and/or finance and the article is long. Alternatively, the possibility is relatively low that important information is included in a part that is not displayed as the preview information when the category of the content is entertainment and/or sports because matters that easily attract the user's attention are included in the beginning. Accordingly, as described above, by varying the percentage in accordance with the categories, the content, which belongs to a field where the whole content is desired to be viewed by the user, it is possible to maintain the status of a content such that the user is able to take note of the same to a greater degree compared to other content that is displayed.

The choices of the determination condition may include a determination condition to determine that the content corresponding to the icon has been viewed when a predetermined operation is performed to the icon after the icon is selected and the preview information is displayed. The predetermined operation may be, for example, a tap operation, a flick operation, and a drag operation against the icon. The difference between this predetermined operation and the tap operation of the second determination condition described above is that this predetermined operation is performed when an icon is not in a predetermined position. It is determined that the content corresponding to the icon has been viewed when the predetermined operation is performed against the icon after the preview information of the content has been displayed.

It is to be noted that the predetermined operation may be an operation performed for purposes different from a purpose of selecting a determination condition. For example, the predetermined operation may be an operation to hide an icon or an operation to add a favorite attribute to an icon, and so on. An operation to hide an icon is, for example, a flick operation to be performed toward the outside of the oval in which a plurality of icons are arranged. In this case, for example, display controller 114 moves and displays the icon, which is to be hidden, in a direction of the flick operation and hides the icon by moving the icon beyond the outside of the screen. Display controller 114 increases the spacing of the plurality of icons between each other due to the decrease of the icons or makes the oval smaller and displays the icons. In this case, the content corresponding to the icon that was hidden in the outside of the screen is determined as a viewed status because the operation to hide the icon has been performed.

It is to be noted that display controller 114 may display once again the icon that was hidden. For example, in a case that a content attribute corresponding to the hidden icon and a user attribute are a predetermined combination, display controller 114 displays the hidden icon again, for example, when display of a menu screen is started. Regarding the combination, what appears to be of strong interest to a user is combined to the user attribute, such as a combination of a content attribute of financial article and a user attribute of an employee of a financial firm.

It is to be noted that the user attribute may be estimated by operation history regardless of whether the user attribute is registered. This makes it possible for a user to change the status of a content, an icon of which was hidden in error even though the content is of interest to the user, to a status that the content can be viewed again. Because the content corresponding to the icon that is displayed again in this manner has been determined as previously viewed as described above, the icon is displayed in the viewed manner. However, the icon may be displayed in the manner indicating that the content has not been viewed when the operation shown in Fig. 11 has been performed previously.

The operation to add a favorite attribute is, for example, a flick operation to be performed toward the inside of the oval in which a plurality of icons are arranged. In this case, display controller 114 may display a mark meaning favorite on an icon to which the flick operation is performed, in an overlapping manner. Display controller 114 may move the icon to a provided area where favorite icons are grouped and displayed together. In either case, by a user performs the operation for other purposes described above, a manner of an icon is switched to the viewed manner when the icon is displayed in the manner indicating that content has not been viewed.

### 2-8 Variety of selection operation of an icon

As described in the embodiment, user terminal 10 displays the preview information of the content corresponding to an icon displayed in a predetermined position. An icon is moved to the predetermined position by an operation of a user. The operation performed by the user when the icon is selected in this manner is hereinafter referred to as "a selection operation." It is to be noted that the selection in this example means selection of icons displayed in the predetermined position by display controller 114, and does not necessarily mean selection of an icon that a user intends to select. When a user performs the drag operation, a finger of the user is separated from a display surface at a predetermined position or near the predetermined position. This allows an intended icon to be moved to a predetermined position, and the corresponding preview information to be displayed accordingly.

Meanwhile, when the user performs the flick operation, an icon continues to move for a while after a finger of the user is separated from a display surface, and then the icon stops moving. Therefore, it is difficult to stop the movement of an icon intended by a user in a predetermined position. Furthermore, a user may perform the flick operation not to select the icon but to confirm other icons. In the case, an icon is selected accordingly even though a user does not intend to select an icon. Therefore, the flick operation in this case is treated as the selection operation described above. In any case, an icon that is stopped in the predetermined position by the drag operation is likely to correspond to content whose preview information a user wants to display. Alternatively, an icon that stops in the predetermined position by the flick operation is likely not to correspond to content whose preview information a user wants to view.

Therefore, selection unit 112 may select the determination condition according to a manner of the selection operation of an icon. Specifically, selection unit 112 selects a different determination condition for content whose icon is selected and the preview image is displayed by an operation of the user performed as the selection operation, the operation being terminated after the movement of the icon is stopped (e.g., a drag operation), from a determination condition for content whose icon is selected and the preview image of which is displayed by an operation of the user performed as the selection operation, the operation being terminated (e.g., a flick operation) while the icon is moving (e.g., without stopping the icon.)

For example, regarding of a content corresponding to a drag operation, selection unit 112 selects a determination condition to determine that content has been viewed when only the preview information is displayed. Alternatively, regarding content corresponding to a flick operation, selection unit 112 selects a determination condition to determine that content has been viewed when the preview information is displayed and the predetermined process described above is performed. In this manner, it is possible to change the status of content to the viewed status when preview information, which the user is likely to intend to display, of the content is displayed. And, similarly, it is possible not to change the status of content to the status indicating that content has not been viewed even though the preview information of the content is displayed, when the user is not likely to intend to display the preview information and the preview information is likely to be displayed accidentally.

It is to be noted that the manners of the selection operation are not limited to the above examples. For example, regarding an operation to move an icon (the operation may be a drag operation or a flick operation), manners of the operation may be different based on the moving speed of an icon (e.g., average speed or highest speed). In this case, selection unit 112 selects, for example, a different determination condition in a case when the moving speed of an icon is equal to or higher than a threshold as opposed to a case where the moving speed is below the threshold. When the moving speed is slow, a user may move the finger slowly while seeking a target icon. In this case, an icon indicated by the finger may not be an icon corresponding to the preview information that a user wants to view. Therefore, selection unit 112 selects a determination condition that content has not been viewed even though the preview information is displayed. In this case, it is possible to determine whether content has been viewed or not in accordance with whether a user intends to display the preview information.

### 2-9 Selection of an icon

A selection method of an icon may be different from the one of the embodiment. For example, an icon may be selected by a tap operation or a click operation made against the icon. An icon may be selected by moving an image representing a selection target such as a cursor by using direction keys and by an operation to press a confirmation key (e.g., enter key.) An icon may be selected by an operation to input a menu name by audio input. Not all of the icons may be moved and an icon may be allowed to stay when an icon is selected by performing these operations as selection operations.

By performing any of these operations it is possible to select an icon that a user intends to select. Therefore, regarding content, a preview image of the content is displayed by these operations, and selection unit 112 may select a determination condition that is similar to the content corresponding to a drag operation described above. In this modification, selection unit 112 selects a determination condition according to a manner that a user performs an operation when an icon is selected.

### 2-10 A combination of a manner of a selection operation

Options of selection unit 112 may include a determination condition according to a combination a manner of a selection operation described above and other matters. The other matters are, for example, a content attribute, a user attribute, a user's location and time when the preview information is displayed described above. For example, when a content attribute is combined with the manner of selection, selection unit 112 selects a different determination condition in a case that an icon, a category of content (e.g., gourmet) that is desired to be viewed by a user, is selected by a drag operation, from a different determination condition in a case where another category of an icon (e.g., whether information) is selected by a drag operation.

For example, in a case where a particular category of content is desired to be viewed by a user, selection unit 112 selects a determination condition to determine that content has been viewed when the preview information is displayed and the predetermined process described above is executed. In a case of another category of content, selection unit 112 selects a determination condition to determine that content has been viewed when a period during which the preview information is displayed exceeds a threshold. This makes it possible to maintain the manner of indicating that content has not been viewed depending on a category of the content and maintaining a status that a user can take note of easily even though a user intends to display the preview information. Therefore, the determination of whether content has been viewed or not is performed more accurately compared to a case where a content attribute is not taken into consideration.

Selection unit 112 also selects a different condition when an icon, a category of content that is desired to be viewed by a user, is selected by a flick operation, from a condition for selecting another category of content by a flick operation. For example, in a case where a category of content is desired to be viewed by a user, selection unit 112 selects a determination condition to determine that content has been viewed when a period during which the preview information is displayed exceeds a threshold (a value of the threshold may be the same as the one of the drag operation described above, or be different from the one.) In a case of another category of content, selection unit 112 selects a determination condition to determine that content has been viewed when only preview information is displayed.

In this way, even though the preview information is displayed without a user not intending to, the content, a category of which is desired to be viewed by a user, is continued to be displayed in the manner indicating that content has not been viewed, and the status of a content is maintained such that a user can take note of it easily. It enables the determination of whether content has been viewed to be performed more accurately as compared to a case where determination is made without takin into consideration a content attribute. A combination of the determination conditions is not limited to the above example. The determination condition may be selected according to a combination of a manner of the selection operation and other matters so as to determine more accurately whether content has been viewed.

### 2-11 Determination condition

As described in the above embodiment and the above modifications, each determination condition is determined based on one or more properties from among a content property (e.g., a content attribute), a user property (e.g., a user attribute, a location where a user is, a manner of the select operation of an icon), and a situation property (e.g., time when the preview information is displayed.) These properties exercise an effect on a criterion for determining whether a user obtains sufficient information by the preview information being displayed even though the user may not view all of the content. The criterion is, for example, a threshold of the displayed period of the preview information, the predetermined processing described in the modification 2-7, a predetermined operation, a predetermined percentage, and so on. Any priority may be used other than those described above (e.g., a content attribute) if it makes an effect to any one of these criterion. In either case, selection unit 112 selects any one of a plurality of the determination conditions that is based on one or more priorities from among a content priority, a user priority, and a situation priority.

### 2-12 Display of icon

In the above embodiment, a plurality of icons are displayed in an elliptical line. However, a display manner of the icons is not limited to this example. For example, the icons are arranged and displayed in two or more lines. Alternatively, the icons are arranged and displayed in a shape having an end (e.g., a linear shape) instead of a shape without an end, such as an elliptical shape. When the shape having an end is used, the icons may be moved in a fixed order by displaying the icons at a side of the display area opposite to the side at which they are hidden from the display area. However, it is not necessary to use a circular movement. The icons may be displayed such that they reciprocate along a line by preventing a further movement after the end of the row of icons arrives at a predetermined position.

### 2-13 Predetermined position

The predetermined position, namely, a position at which preview information is displayed when an icon is displayed, may be a different position from that in the above embodiment. For example, the predetermined position may be a position other than the center of area A1 namely, the center of a display area of icons. A plurality of predetermined positions may be provided. In this case, a plurality of items of preview information may be displayed.

### 2-14 Display of preview information

In the above embodiment, display controller 114 displays preview information in area A2 having a fixed size, shape, and arrangement. However, display controller 114 may display preview information in an area different in size, shape, or arrangement from area A2. Display controller 114 may vary a size, shape, and arrangement of an area in which preview information is displayed. For example, display controller 114 may vary the size according to an amount of preview information. Display controller 114 may vary the arrangement according to a category of content. The preview information may be displayed by scrolling, or may extend over a plurality of pages. However, to allow a user to view the preview information at first sight, it is preferred that the preview information is included within a display area.

Display controller 114 may display preview information within an icon in an overlapping manner. For example, display controller 114 magnifies an icon stopped at a predetermined position, and displays preview information inside the icon. Display controller 114 may display preview information in both area A2 and the icon. In any of these cases, preview information displayed within the icon is changed each time the icon is selected.

### 2-15 A plurality of devices

In the embodiment, control unit 11 of user terminal 10 realizes functions corresponding to each unit shown in fig. 8. Control units of a plurality of devices may realize these functions.

Fig. 16 is an example of a functional configuration in this modification. In this example, control unit 11 realizes functions corresponding to selection unit 112 and determination unit 113. Control unit 11a realizes functions corresponding to acquisition unit 111 and display controller 114. Control unit 11a is, for example, a control unit of display device that is dedicated to functions that acquire distributed content and displays the information. In this way, a group of functions shown in Fig. 8 are realized by a plurality of devices cooperating with each other. It is to be noted that, in another example that is different from the example of Fig. 16, selection unit 112 and determination unit 113 may be implemented to different devices.

### 2-16 Display unit

In the above embodiment, display controller 114 controls a display unit of the terminal (included in input unit 14) to display icons or other information. However, instead of this display unit, display controller 120 may control another display unit of an external device. If this display unit is sufficiently large, display controller 114 may display a plurality of icons, preview information, and content together. In this case, for example, display controller 114 may cause a plurality of icons and preview information to be displayed in a predetermined positional relationship (e.g., in adjacent areas A1 and A2 shown in Fig. 4), and may cause content to be displayed in an arrangement having no positional relationship with the plurality of icons and preview information (e.g., an arrangement determined for each app, or an arrangement freely changed by a user). It is to be noted that in another example, the positional relationship between a plurality of icons and preview information does not have to be determined, or alternatively a positional relationship between a plurality of icons, preview information, and content may be determined. In any of these cases, preview information is displayed in an area that is different from a display area of content and that is also determined to be that in which preview information is displayed.

### 2-17 Category of the invention

The present invention is understood as, in addition to each information processing device such as the above user terminal and distribution device, another device may be used for realizing the function group described above, or a distribution system of content including these devices may be used. The present invention is also understood to be an information processing method to execute a process carried out by these devices, or a program causing a computer to control functions of these devices. This program may be provided by being stored in a recording medium, such as an optical disk, or may be downloaded onto a computer via a network, such as the Internet, and installed therein so as to be made available.

## Claims

1. An information processing device, comprising:
a selection unit that selects a condition from among a plurality of conditions for determining whether to change a status of the content to a value indicating that the content has been viewed, in a case that information showing that at least a part of the content is displayed, the content corresponding to an image selected from among a plurality of images respectively corresponding to a plurality of categories of contents, the plurality of conditions being related to one or more attributes of a content attribute, a user attribute and a situation attribute; and
a determination unit that determines whether to change the status of the content including the displayed information to the value indicating that the content has been viewed in accordance with the selected condition.

2. The information processing device according to Claim 1, wherein
the selection unit selects the condition in response to an item of an attribute of the content including the displayed information, an attribute of a user who is determined as being a viewer of the content, a location where the user is located or a time when the information is displayed.

3. The information processing device according to Claim 2, wherein
the selection unit selects the condition in response to a relationship between a time duration in which the information is displayed and a threshold set for the item.

4. The information processing device according to any one of Claims 1 to 3, wherein
responsive to a selection operation performed by a user to select the image corresponding to the content including the displayed information, the selection unit selects the condition in response to a manner in which the user performs the selection operation when the image is selected.

5. The information processing device according to Claim 4, wherein,
the selection unit selects the condition in response to a combination of the manner of a user's selection operation and one of an attribute of the content including the displayed information, an attribute of a user who is determined as being a viewer of the content, a location where the user is located or a time when the information is displayed.

6. The information processing device according to any one of Claims 1 to 5, further comprising
a display controller that performs a display control of the plurality of images, the display control including arranging the plurality of images on at least one row, moving the plurality of images along the at least one row in response to an operation performed by a user, and displaying, in a predetermined area, the information included in a content corresponding to an image, which is one of the plurality of images, displayed at a predetermined position of the at least one row.

7. The information processing device according to Claim 6, wherein
the display controller stops the image from moving in response to termination of an operation performed by a user while the image keeps moving, and
responsive to a selection operation performed by a user to select the image corresponding to the content including the displayed information, the selection unit selects a different determination condition for a content including the displayed information in response to an operation of the user performed as the selection operation, the operation being terminated after the movement of the image is stopped, and for a content including the displayed information in response to an operation of the user performed as the selection operation, the operation being terminated while the image is moving.

8. A program for causing a computer to execute a process, the process comprising:
selecting a condition from among a plurality of conditions for determining whether to change a status of the content to a value showing that the content has been viewed, in a case that information showing at least a part of the content is displayed, the content corresponding to an image selected from among a plurality of images respectively corresponding to a plurality of categories of contents, the plurality of conditions being related to one or more attributes of a content attribute, a user attribute and a situation attribute; and
determining whether to change the status of the content including the displayed information to the value indicating that the content has been viewed in accordance with the selected condition.
